# EUROPEAN PATENT SPECIFICATION

(11) **EP 2 843 383 B1**
(45) Date of publication and mention of the grant of the patent: **05.10.2016**
(21) Application number: 14180786.7
(22) Date of filing: 13.08.2014
(51) Int. Cl.: G01K 7/24, G01K 15/00

(54) **Temperature measurement apparatus using negative temperature coefficient thermistor**
Temperaturmessvorrichtung unter Verwendung eines Heißleiters
Appareil de mesure de température utilisant une thermistance à coefficient de température négatif

(30) Priority: 02.09.2013 KR 20130104932
(43) Date of publication of application: 04.03.2015
(73) Proprietor: LSIS Co., Ltd., Anyang-si, Gyeonggi-do 431-848 (KR)
(72) Inventor: Jin, Ho Sang, 431-848 Anyang-si, Gyeonggi-do (KR); Yang, Chun Suk, 431-848 Anyang-si, Gyeonggi-do (KR); Lee, Jae Ho, 431-848 Anyang-si, Gyeonggi-do (KR); Park, Chan Gi, 431-848 Anyang-si, Gyeonggi-do (KR)
(74) Representative: Lang, Johannes

(56) References cited:
- GB-A- 2 298 284
- JP-A- H11 281 499
- US-A- 5 350 237

## Description

### CROSS-REFERENCE TO RELATED APPLICATIONS

The present application claims priority under 35 U.S.C. 119 and 35 U.S.C. 365 to Korean Patent Application No. 10-2013-0104932 (filed on September 2nd, 2013).

### BACKGROUND

The present disclosure relates to a temperature measurement apparatus using a negative temperature coefficient (NTC) thermistor.

The NTC thermistor has a negative temperature coefficient and changes in electric resistance, which is used as a temperature sensor due to such features. Particularly, in case of automobiles and electric automobiles stably operating within a range from about -45 oc to about 120 oc, a temperature is measured using a temperature sensor using the NTC thermistor. Also, components of automobiles and electric automobiles are protected by controlling charging a battery according to a measured temperature.

Merely, due to properties of the temperature sensor using the NTC, a range of fluctuation in voltage according to a temperature near a lower limit value or an upper limit value of a measurement range of the temperature sensor. Accordingly, it is impossible to definitely check whether the temperature sensor using the NTC normally operates and whether a short circuit or a disconnection of an NTC thermistor occurs. Accordingly, it is necessary to provide a temperature measurement apparatus capable of definitely determining a disconnection and a short circuit near a lower limit value or an upper limit value of a measurement range of a temperature sensor using an NTC.

JP H 11 281 499 A discloses a temperature detecting circuit with a thermistor which is series-connected to a variable reference resistor and coupled to a sample-hold means to detect disconnection of the thermistor.

GB 2 298 284 A discloses a thermistor type temperature sensor wherein a thermistor element is series connected with output resistors in an external circuit.

### SUMMARY

The object of the invention is therefore to provide an improved temperature measurement apparatus and method.

This object is achieved by the invention as defined in the independent claims; embodiments of the invention are defined in the dependent claims.

Aspects provide a temperature measurement apparatus capable of definitely determining whether a disorder such as a disconnection and a short circuit occurs near a lower limit value or an upper limit value of a measurement range of a temperature sensor using an NTC.

In one aspect, a temperature measurement apparatus using a negative temperature coefficient (NTC) thermistor includes a temperature sensor including the NTC thermistor and a variable resistor part, in which a resistance value of the variable resistor part varies between a default resistance value for measuring a temperature and a temporary resistance value for determining a disconnection and an abnormal operation determination unit determining whether the NTC thermistor is disconnected, based on an output voltage of the temperature sensor when the variable resistor part has the temporary resistance value.

It is possible to definitely check whether a disorder such as a disconnection and a short circuit occurs near a lower limit value and an upper limit value of a temperature measurable range of the temperature sensor using an NTC. Accordingly, in automobiles and electric automobiles using the temperature sensor using the NTC thermistor, it is possible to increase the reliability of a controlling operation while controlling operations such as charging according to a temperature. Also, it is early checked whether the temperature sensor using the NTC thermistor breaks down, thereby allowing a component to be replaced at the beginning of an failure.

The details of one or more embodiments are set forth in the accompanying drawings and the description below. Other features will be apparent from the description and drawings, and from the claims.

### BRIEF DESCRIPTION OF THE DRAWINGS

FIG. 1 is a block diagram illustrating a temperature measurement apparatus according to an embodiment;
FIG. 2 is a circuit diagram illustrating the temperature measurement apparatus of FIG. 1;
FIG. 3 is a flowchart illustrating operations of the temperature measurement apparatus according to an embodiment;
FIG. 4 illustrates changes of a temperature-voltage curve of a temperature sensor according to a fixed resistance value included in a temperature sensor using a negative temperature coefficient (NTC);
FIG. 5 is a block diagram illustrating a temperature measurement apparatus according to another embodiment;
FIG. 6 is a circuit diagram illustrating the temperature measurement apparatus of FIG. 5; and
FIG. 7 is a flowchart illustrating operations of the temperature measurement apparatus of FIG. 5.

### DETAILED DESCRIPTION OF THE EMBODIMENTS

Hereinafter, with reference to the attached drawings, various embodiments will be described in detail to allow those skilled in the art to easily execute. The embodiments may be provided as various different forms and are not limited to the embodiments. Also, in order to definitely describe the embodiments, an irrelevant part will be omitted. Throughout the specification, like reference numerals refer to like elements.

Also, it will be further understood that the terms "comprises" and/or "comprising" used herein specify the presence of stated features or components, but do not preclude the presence or addition of one or more other features or components.

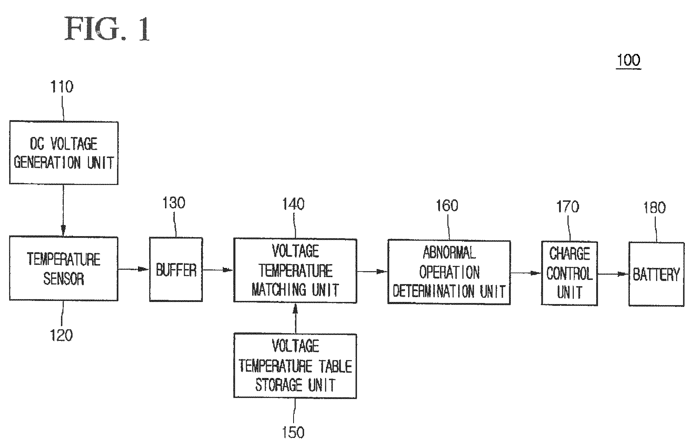

Hereinafter, referring to FIGS. 1 to 3, a temperature measurement apparatus 100 according to an embodiment will be described.

FIG. 1 is a block diagram illustrating the temperature measurement apparatus 100.

Referring to FIG. 1, the temperature measurement apparatus 100 includes a direct current (DC) current generation unit 110, a temperature sensor 120, a buffer 130, a voltage temperature matching unit 140, a voltage temperature table storage unit 150, an abnormal operation determination unit 160, a charge control unit 170, and a battery 180.

The DC voltage generation unit 110 generates a DC voltage.

The voltage temperature table storage unit 150 stores a voltage temperature table. The voltage temperature table includes a plurality of temperature values corresponding to a plurality of output voltages of the temperature sensor 120, respectively.

The charge control unit 170 controls a charging operation related to the battery 180 of an electric automobile according to a disconnection sensing signal and a short-circuit sensing signal outputted by the abnormal operation determination unit 160.

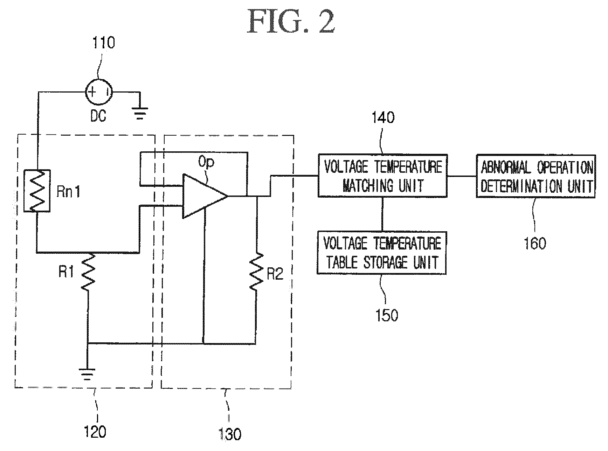

Other components of the temperature measurement apparatus 100 will be described in detail with reference to FIG. 2.

FIG. 2 is a circuit diagram illustrating the temperature measurement apparatus 100.

The temperature sensor 120 includes a negative temperature coefficient (NTC) thermistor Rn1 and a fixed resistor R1. The NTC thermistor Rn1 has one end to which a DC voltage generated by the DC voltage generation unit 110 is applied. The fixed resistor R1 has one end connected to another end of the NTC thermistor Rn1 and another end grounded.

A voltage applied to the fixed resistor R1 is allowed to be an output voltage of the temperature sensor 120. The output voltage of the temperature sensor 120 is a value obtained by multiplying an input voltage by intensity of the fixed resistor R1/(a resistance value of the NTC thermistor Rn1 + the intensity of the fixed resistor R1). The resistance value of the NTC thermistor Rn1 becomes smaller as a temperature increases. Accordingly, an output voltage becomes greater as the temperature increases. On the contrary, the resistance value of the NTC thermistor Rn1 becomes greater as the temperature decreases. Accordingly, the output voltage becomes smaller as the temperature decreases.

The buffer 130 includes an operational amplifier Op and a fixed resistor R2. An input end of the operational amplifier Op is connected to the one end of the fixed resistor R1, to which the output of the temperature sensor 120 is applied, and the other end of the NTC thermistor Rn1. The fixed resistor R2 has one end connected to an output end of the operational amplifier Op and another end grounded. Since the buffer 130 includes the operational amplifier Op, which is an active element, the output voltage of the temperature sensor 120 may be buffered without a load effect and a buffered voltage may be outputted.

An input end of the voltage temperature matching unit 140 is connected to the output end of the operational amplifier Op and the one end of the fixed resistor R2.

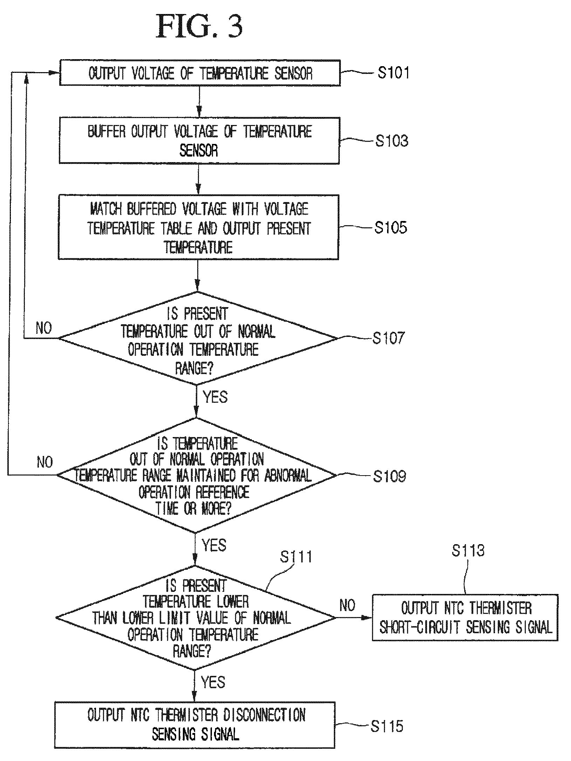

FIG. 3 is a flowchart illustrating operations of the temperature measurement apparatus 100.

The temperature 120 outputs a voltage value corresponding to a present temperature by using a resistance value of the NTC thermistor Rn1, varying with a temperature (S101).

The buffer 130 buffers the output voltage of the temperature sensor 120 and outputs a buffered voltage (S103). When the temperature sensor 120 and the voltage temperature matching unit 140 are directly connected to each other without the buffer 130, since the load effect may occur and a voltage may be dropped, it is impossible to transmit an accurate voltage value. Accordingly, the output voltage of the temperature sensor 120 may be accurately transmitted to the voltage temperature matching unit 140 through the buffer 130.

The voltage temperature matching unit 140 matches the buffered voltage with a voltage on a voltage temperature table stored in the voltage temperature table storage unit 150 and outputs a present temperature corresponding to the buffered voltage value (S105). The voltage temperature table varies with properties of the temperature sensor 120. On the other hand, the buffer 130 may be omitted. In this case, the voltage temperature matching unit 140 may output a present temperature corresponding to the output voltage of the temperature sensor 120.

The abnormal operation determination unit 160 determines whether the present temperature is out of a preset normal operation temperature range (S107). The normal operation temperature range is formed by setting a range of a temperature corresponding to an output voltage that is not a disconnection or a short circuit in a temperature range measurable by the temperature sensor 120. When the present temperature is out of the normal operation temperature range, there is a probability of a disconnection or a short circuit.

When the present temperature is out of the normal operation temperature range, the abnormal operation determination unit 160 determines whether the present temperature maintains a value out of the normal operation temperature range for more than a preset abnormal operation reference time (S109). When it is not more than an abnormal operation reference time, the abnormal operation determination unit 160 determines it as a normal operation state.

When the present temperature maintains the value out of the normal operation temperature range for more than the abnormal operation reference time, the abnormal operation determination unit 160 determines whether the present temperature is lower than a lower limit value of the normal operation temperature range (S111).

When the present temperature is not lower than the lower limit of the normal operation temperature range, the abnormal operation determination unit 160 outputs a short-circuit sensing signal for indicating a short circuit of the NTC thermistor Rn1 (S113). When the present temperature is higher than an upper limit value of the normal operation temperature range and the NTC thermistor Rn1 is short-circuited, a voltage supplied by the DC voltage generation unit 110 is all applied to the fixed resistor R2 and the voltage temperature matching unit 140 outputs a very high present temperature.

When the present temperature is lower than the lower limit of the normal operation temperature range, the abnormal operation determination unit 160 outputs a disconnection sensing signal indicating a disconnection of the NTC thermistor (S113). When the NTC thermistor Rn1 is disconnected, the voltage supplied by the DC voltage generation unit 110 is absolutely not applied to the fixed resistor R1 and the temperature matching unit 140 outputs a very low present temperature.

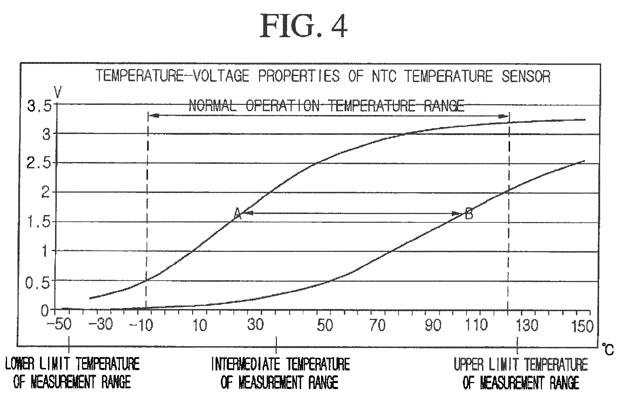

Hereinafter, referring to FIGS. 4 to 7, a temperature measurement apparatus according to another embodiment will be described.

FIG. 4 illustrates changes of a temperature-voltage curve of the temperature sensor 120 according to a resistance value included in the temperature sensor 120 using an NTC.

The output voltage of the temperature sensor 120 is the intensity of the fixed resistor R1/(the resistance value of the NTC thermistor Rn1 + the intensity of the fixed resistor R1). Accordingly, at a high temperature, in which the resistance value of the NTC thermistor Rn1 is relatively small as the intensity of the fixed resistor R1 increases, an effect of changes in the resistance value of the NTC thermistor Rn1 becomes insignificant in such a way that the curve of FIG. 4 moves toward an A curve. On the contrary, at a low temperature, in which the resistance value of the NTC thermistor Rn1 is relatively great as the intensity of the fixed resistor R1 decreases, the effect of changes in the resistance value of the NTC thermistor Rn1 becomes insignificant in such a way that the curve of FIG. 4 moves toward a B curve. Due to such properties of the temperature sensor 120, it becomes inaccurate to measure a temperature at a low temperature or a high temperature according to the intensity of the fixed resistor R1 included in the temperature sensor 120.

Accordingly, when the abnormal operation determination unit 160 determines a disconnection or a short circuit according to whether the present temperature maintains being out of the normal operation temperature range for the abnormal operation reference time or more, a state that is neither a disconnection nor a short circuit may be determined as a disconnection or a short circuit.

Accordingly, in the embodiment, in order to increase the linearity of temperature-voltage properties at an intermediate temperature or more of the temperature measurement range, a value of the fixed resistor R1 included in the temperature sensor 120 is adjusted to allow an inclination at the intermediate temperature or more of the temperature measurement range to be greater than an inclination of a temperature-voltage curve at the intermediate temperature or less of the temperature measurement range. In FIG. 4, the curve is forced to move toward the B curve. According thereto, temperature of the intermediate temperature or more of the temperature measurement range is allowed to be precisely measured.

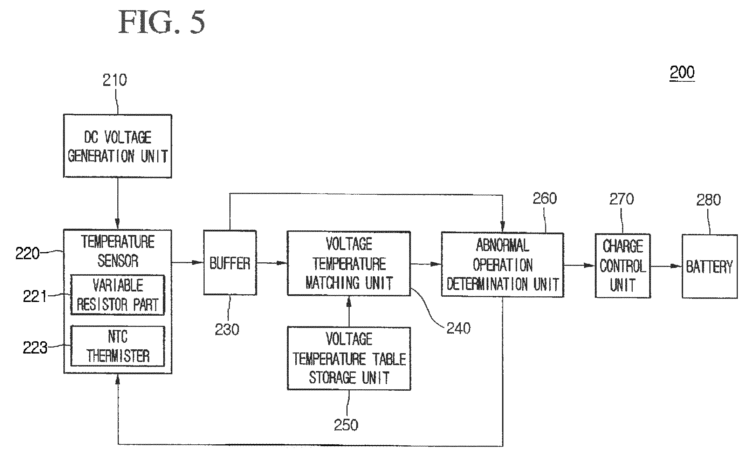

Determining whether the NTC thermistor is short-circuited is determined according to whether an output temperature of the voltage temperature matching unit 140 maintains being higher than the upper limit value of the normal operation temperature range for exceeding an abnormal operation reference time. Since a degree of precision of temperature measurement relatively decreases at the intermediate temperature or less of the temperature measurement range, it is determined by adding an additional switch and an additional fixed resistor whether being disconnected. An operation of determining whether being disconnected will be described in detail with reference to FIGS. 5 to 7.

FIG. 5 is a block diagram illustrating a temperature measurement apparatus 200 according to another embodiment.

Referring to FIG. 5, the temperature measurement apparatus 200 may include a DC current generation unit 210, a temperature sensor 220, a buffer 230, a voltage temperature matching unit 240, a voltage temperature table storage unit 250, an abnormal operation determination unit 260, a charge control unit 270, and a battery 280.

The DC voltage generation unit 210 generates a DC voltage.

The temperature sensor 220 includes an NTC thermistor 223 and a variable resistor part 221. The variable resistor part 221 has one of a plurality of resistance values under the control of the abnormal operation determination unit 260. In this case, the plurality of resistance values includes a default resistance value for measuring a temperature and a temporary resistance value for determining whether being disconnected.

The voltage temperature table storage unit 250 stores a voltage temperature table. The voltage temperature table includes a plurality of temperature values corresponding to a plurality of output voltages of the temperature sensor 220, respectively.

The charge control unit 270 controls a charging operation related to the battery 280 of an electric automobile according to a disconnection sensing signal and a short-circuit sensing signal outputted by the abnormal operation determination unit 260.

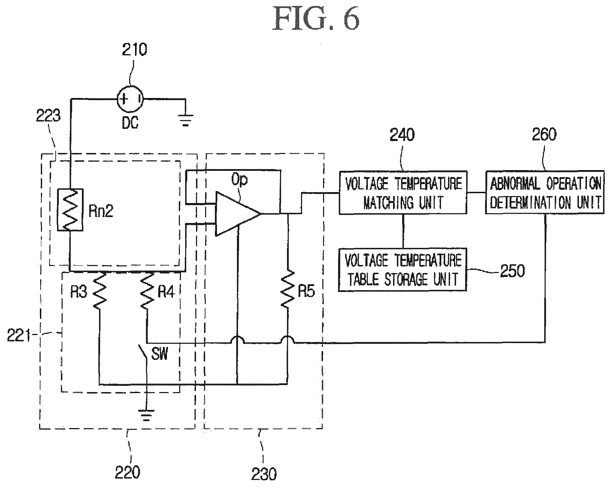

FIG. 6 is a circuit diagram of the temperature measurement apparatus 200.

The variable resistor part 221 of the temperature sensor 220 includes a fixed resistor R3, a fixed resistor R4, and a switch SW. The NTC thermistor Rn2 has one end to which a DC voltage generated by the DC voltage generation unit 210 is applied. The resistor R3 has one end connected to another end of the NTC thermistor Rn2 and another end grounded.

The fixed resistor R4 and the switch SW are connected in series between the NTC thermistor Rn2 and a ground. In the embodiment, one end of the fixed resistor R4 is connected to the NTC thermistor Rn2 and one end of the switch SW is connected to another end of the resistor R4 and another end thereof is grounded. In another example, one end of the switch SW is connected to the NTC thermistor Rn2 and one end of the resistor R4 is connected to another end of the switch SW and another end thereof is grounded.

In the embodiment of FIG. 6, when the switch SW is turned on, a combined resistance value of the fixed resistor R3 and the fixed resistor R4 may be the default resistance value for measuring the temperature. When the switch SW is turned off, the combined resistance value of the fixed resistor R3 and the fixed resistor R4 may be the temporary resistance value for determining the disconnection.

In a graph of FIG. 4, to allow temperature-voltage properties of the temperature sensor 220 to correspond to the B curve rather than the A curve, the default resistance value of the variable resistor part 221 may be smaller than a resistance value of the NTC thermistor Rn2 at the intermediate temperature of the temperature measurement range. To increase the linearity of the temperature-voltage properties of the temperature sensor 220 between the upper limit temperature and the intermediate temperature of the temperature measurement range, the default resistance value of the variable resistor part 221 may be smaller than 1/5 of the resistance value of the NTC thermistor Rn2 at the intermediate temperature of the temperature measurement range.

On the other hand, to allow determining whether being disconnected to be easily performed within a low temperature range of the temperature measurement range, the temporary resistance value of the variable resistor part 221 may be greater than the default resistance value of the variable resistor part 221. When there is shown a noticeable difference between output voltages of the temperature sensor 220 having the temporary resistance value and having the default resistance value, it is clearly determined whether being disconnected.

To allow the determining whether being disconnected to be easily performed within the low temperature range of the temperature measurement range, the temporary resistance value of the variable resistor part 221 may be greater than ten times the default resistance value of the variable resistor part 221. For this, the resistance value of the fixed resistor R3 may be greater than ten times the resistance value of the fixed resistor R4.

The switch SW may be turned on or off by the abnormal operation determination unit 260. Particularly, the switch SW may be a transistor such as metal-oxide semiconductor field effect transistor (MOSFET).

The buffer 230 includes an operational amplifier Op and a fixed resistor R5. An input end of the operational amplifier Op is connected to the one end of the fixed resistor R3, to which an output of the temperature sensor 220 is applied, and the other end of the NTC thermistor Rn2. The fixed resistor R5 has one end connected to an output end of the operational amplifier Op and another end grounded. Since the buffer 230 includes the operational amplifier Op, which is an active element, the output voltage of the temperature sensor 220 may be buffered without a load effect and a buffered voltage may be outputted.

An input end of the voltage temperature matching unit 240 is connected to the output end of the operational amplifier Op and the one end of the fixed resistor R5.

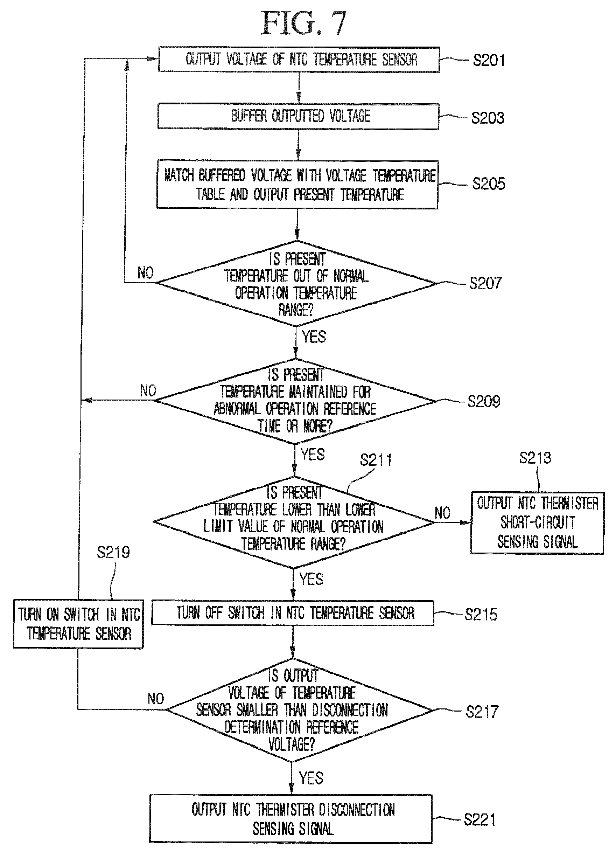

Other components of the temperature measurement apparatus 200 will be described in detail with reference to FIG. 7.

FIG. 7 is a flowchart illustrating operations of a method of detecting a disorder of the temperature sensor 220.

The temperature 220 outputs a voltage value corresponding to a present temperature by using the resistance value of the NTC thermistor Rn2, varying with a temperature and the default resistance value of the variable resistor part 211 (S201).

The buffer 230 buffers the output voltage of the temperature sensor 220 and outputs a buffered voltage (S203). When the temperature sensor 220 and the voltage temperature matching unit 240 are directly connected to each other without the buffer 230, since a load effect may occur and a voltage may be dropped, it is impossible to transmit an accurate voltage value. Accordingly, the output voltage of the temperature sensor 220 may be accurately transmitted to the voltage temperature matching unit 240 through the buffer 230.

The voltage temperature matching unit 240 matches the buffered voltage with a voltage on a voltage temperature table stored in the voltage temperature table storage unit 250 and outputs a present temperature corresponding to the buffered voltage value (S205). The voltage temperature table varies with properties of the temperature sensor 220. On the other hand, the buffer 230 may be omitted. In this case, the voltage temperature matching unit 240 may output a present temperature corresponding to the output voltage of the temperature sensor 220.

The abnormal operation determination unit 260 determines whether the present temperature is out of a preset normal operation temperature range (S207). When it is not more than an abnormal operation reference time, the abnormal operation determination unit 160 determines it as a normal operation state.

When the present temperature is out of the normal operation temperature range, the abnormal operation determination unit 260 determines whether the present temperature maintains a value out of the normal operation temperature range for more than the preset abnormal operation reference time (S209). When it is not more than the abnormal operation reference time, the abnormal operation determination unit 160 determines it as a normal operation state.

When the present temperature maintains the value out of the normal operation temperature range for more than an abnormal operation reference time, the abnormal operation determination unit 260 determines whether the present temperature is lower than a lower limit value of the normal operation temperature range (S211).

When the present temperature is not lower than the lower limit of the normal operation temperature range, the abnormal operation determination unit 260 outputs a short-circuit sensing signal indicating a short circuit of the NTC thermistor (S213).

When the present temperature is lower than the lower limit of the normal operation temperature range, the abnormal operation determination unit 260 controls the variable resistor part 221 in the temperature sensor 220 to have the temporary resistance value (S215). Particularly, in the embodiment of FIG. 6, the abnormal operation determination unit 260 turns off the switch SW in the temperature sensor 220. When the switch SW is turned off, intensity of a combined resistance of the fixed resistor R3 and the fixed resistor R4 of the temperature sensor 220 is changed. Accordingly, when the NTC thermistor Rn2 is not disconnected, the output voltage of the temperature sensor 220 becomes different from before turning off the switch.

In this case, since the switch is turned off, it is impossible to allow the voltage temperature matching unit 240 to match the output voltage of the temperature 220 with the voltage temperature table and to output a present temperature. Accordingly, before the switch is short-circuited or a disconnection signal is outputted, a gap in the temperature measurement occurs. During the gap, the abnormal operation determination unit 260 outputs a temperature before turning the switch on and inputs the temperature to the charge control unit 270. Accordingly, as the switch operates at the higher speed, the gap in the temperature measurement may be more reduced. When an MOSFET operating at a high speed, whose general open short-circuit operation time is less than 20 ms, is used as the switch, the gap in the temperature measurement may be reduced.

The abnormal operation determination unit 260 determines whether a voltage outputted by the temperature sensor 20 according to the temporary resistance value of the variable resistance unit 221 is greater than a disconnection determination reference voltage (S217). Particularly, in the embodiment of FIG. 6, the abnormal operation determination unit 260 determines whether the output voltage of the temperature sensor 220 after turning off the switch is greater than the disconnection determination reference voltage. In the embodiment, the intensity of a disconnection determination reference voltage of the fixed resistor R3 may be set as a half or 2/3 of the intensity of a voltage of the DC voltage generation unit 210.

The abnormal operation determination unit 260, when the output voltage of the temperature sensor 220 is smaller than the disconnection determination reference voltage, determines the temperature sensor 220 as being in a normal operation state and turns on the switch SW in the temperature sensor 220 (S219).

The abnormal operation determination unit 260 outputs an NTC thermistor disconnection sensing signal when the output voltage is smaller than the disconnection determination reference voltage (S221). When the NTC thermistor Rn2 is disconnected, since the voltage is not supplied from the DC voltage generation unit 210 to the variable resistor part 221, a voltage lower than the disconnection determination reference voltage is outputted.

Features, structures, effects, etc. described in the above embodiments, are included in at least one embodiment and but are not limited to one embodiment. In addition, features, structures, effects, etc. described in the respective embodiments may be executed by a person of ordinary skill in the art while being combined or modified with respect to other embodiments. Accordingly, it will be understood that contents related the combination and modification will be included in the scope of the embodiments.

It should be understood that the exemplary embodiments described therein should be considered in a descriptive sense only and not for purposes of limitation. It will be understood by those of ordinary skill in the art that various changes in form and details may be made therein without departing from the spirit and scope of the embodiments. For example, respective components shown in detail in the embodiments may be executed while being modified. Also, it will be understood that differences related to the modification and application are included in the scope of the present invention as defined by the following claims.

## Claims

1. A temperature measurement apparatus using a negative temperature coefficient (NTC) thermistor (Rn2), comprising:
a temperature sensor (220) comprising the NTC thermistor (Rn2) and a variable resistor part (221), in which a resistance value of the variable resistor part (221) varies between a default resistance value for measuring a temperature and a temporary resistance value for determining a disconnection; and
an abnormal operation determination unit (260) determining whether the NTC thermistor (Rn2) is disconnected, based on an output voltage of the temperature sensor (220) when the variable resistor part (221) has the temporary resistance value,
**characterized in that** the default resistance value is smaller than a resistance value of the NTC thermistor (Rn2) at a predetermined temperature, the abnormal operation determination unit (260) is configured to determine the NTC thermistor (Rn2) to be disconnected, when the intensity of the output voltage of the temperature sensor (220) is smaller than a disconnection determination reference voltage while the variable resistor part (221) has the temporary resistance value, the abnormal operation determination unit (260) is configured to allow the variable resistor part (221) to have the temporary resistance value, when a present temperature maintains a value lower than a lower limit temperature of a preset normal operation temperature range for an abnormal operation reference time or more, and **in that** the abnormal operation determination unit (260) is configured to determine a short circuit of the NTC thermistor (Rn2) when the present temperature maintains a value higher than an upper limit temperature of the normal operation temperature range for the abnormal operation reference time or more.

2. The temperature measurement apparatus of claim 1, wherein the variable resistor part (221) comprises a first fixed resistor (R₃), a second fixed resistor (R₄), and a switch (SW).

3. The temperature measurement apparatus of claim 1, further comprising:
a voltage temperature table storage unit (250) storing a voltage temperature table comprising a plurality of temperature values corresponding to a plurality of output voltages of the temperature sensor (220), respectively; and
a voltage temperature matching unit (240) matching the output voltage with the stored voltage temperature table and outputting a present temperature.

4. A method of operating a temperature measurement apparatus using an NTC thermistor (Rn2), the method comprising:
determining whether a present temperature is out of a preset normal operation temperature range by using a default resistance value of a variable resistor part (221) of a temperature sensor (220);
controlling the temperature sensor (220) to allow the variable resistor part (221) to have a temporary resistance value when the present temperature is out of the preset normal operation temperature range; and
determining whether the NTC thermistor (Rn2) is disconnected, based on an output voltage of the temperature sensor (220), when the variable resistor part (221) has the temporary resistance value,
wherein the default resistance value is smaller than a resistance value of the NTC thermistor (Rn2) at a predetermined temperature,
the method further comprises determining (S211) a short circuit of the NTC thermistor (Rn2) when the present temperature maintains a value higher than an upper limit temperature of the normal operation temperature range for an abnormal operation reference time or more ,
wherein the determining of whether the NTC thermistor (Rn2) is disconnected comprises determining (S217) whether the intensity of the output voltage of the temperature sensor (220) is smaller than a disconnection determination reference voltage while the variable resistor part (221) has the temporary resistance value.

5. The method of claim 4, wherein the variable resistor part (221) comprises a first fixed resistor (R3), a second fixed resistor (R4), and a switch (SW).

## Patentansprüche

1. Temperatur-Messeinrichtung, die einen Thermistor (Rn2) mit negativem Temperaturkoeffizient (NTC) verwendet, enthaltend:
einen Temperatursensor (220) enthaltend den NTC Thermistor (Rn2) und einen variablen Widerstandsteil (221), in dem ein Widerstandswert des variablen Widerstandsteils (221) variiert zwischen einem vorgegebenen Widerstandswert zum Messen einer Temperatur und einem temporären Widerstandswert zum Feststellen einer Trennung; und
eine Störbetriebs-Feststellungseinheit (260), die feststellt, ob der NTC Thermistor (Rn2) getrennt ist, basierend auf einer Ausgangsspannung des Temperatursensors (220), wenn der variable Widerstandsteil (221) den temporären Widerstandswert aufweist,
**dadurch gekennzeichnet, dass**
der vorgegebene Widerstandswert kleiner ist als ein Widerstandswert des NTC Thermistors (Rn2) bei einer vorbestimmten Temperatur,
die Störbetriebs-Feststellungseinheit (260) konfiguriert ist, um festzustellen, dass der NTC Thermistor (Rn2) getrennt werden soll, wenn die Intensität der Ausgangsspannung des Temperatursensors (220) kleiner ist als eine Trennungsfeststellungs-Referenzspannung, während der variable Widerstandsteil (221) den temporären Widerstandswert aufweist,
die Störbetriebs-Festfeststellungseinheit (260) konfiguriert ist, es dem variablen Widerstandsteil (221) zu erlauben, den temporären Widerstandswert aufzuweisen, wenn eine aktuelle Temperatur einen Wert aufrecht erhält, der geringer ist als eine untere Grenztemperatur eines voreingestellten Normalbetriebs-Temperaturbereichs für eine Störbetriebs-Referenzzeit oder mehr,
und dadurch
dass die Störbetriebs-Feststellungseinheit (260) konfiguriert ist, um einen Kurzschluss des NTC Thermistor (Rn2) festzustellen, wenn die aktuelle Temperatur einen Wert aufrecht erhält, der höher ist als eine obere Grenztemperatur des Normalbetriebs-Temperaturbereichs für die Störbetriebs-Referenzzeit oder mehr.

2. Temperatur-Messeinrichtung nach Anspruch 1, worin der variable Widerstandsteil (221) einen ersten festen Widerstand (R3), einen zweiten festen Widerstand (R4) und einen Schalter (SW) enthält.

3. Temperatur-Messeinrichtung nach Anspruch 1, weiter enthaltend:
eine Spannungs-Temperatur-Tabelle-Speichereinheit (250), die eine Spannungs-Temperatur-Tabelle speichert, die eine Mehrzahl von Temperaturwerten enthält, die einer Mehrzahl von betreffenden Ausgangsspannungen des Temperatursensors (220) entsprechen; und
eine Spannungs-Temperatur-Vergleichseinheit (240), die die Ausgangsspannung mit der gespeicherten Spannung-Temperatur-Tabelle vergleicht und eine entsprechende aktuelle Temperatur ausgibt.

4. Verfahren zum Betreiben einer Temperatur-Messeinrichtung, die einen NTC Thermistor (Rn2) verwendet, wobei das Verfahren enthält:
Feststellen, ob eine aktuelle Temperatur außerhalb eines voreingestellten Normalbetriebs-Temperaturbereichs liegt unter Verwendung eines vorgegebenen Widerstandswerts eines variablen Widerstandsteils (221) eines Temperatursensors (220);
Steuern des Temperatursensors (220), um es dem variablen Widerstandsteil (221) zu erlauben, einen temporären Widerstandswert aufzuweisen, wenn die aktuelle Temperatur außerhalb des vorgegebenen Normalbetriebs-Temperaturbereichs liegt; und
Feststellen, ob der NTC Thermistor (Rn2) getrennt ist, basierend auf einer Ausgangsspannung des Temperatursensors (220), wenn der variable Widerstandsteil (221) den temporären Widerstandswert aufweist, worin der vorgegebene Widerstandswert kleiner ist als ein Widerstandswert des NTC Thermistors (Rn2) bei einer vorbestimmten Temperatur,
wobei das Verfahren weiter enthält Feststellen (S221) eines Kurzschlusses des NTC Thermistors (Rn2), wenn die aktuelle Temperatur einen Wert aufrecht erhält, der höher ist als eine oberer Grenztemperatur des Normalbetriebs-Temperaturbereichs für eine Störbetriebs-Referenzzeit oder mehr,
wobei das Feststellen, ob der NTC Thermistor (Rn2) getrennt ist, das Feststellen (S217) enthält, ob die Intensität der Ausgangsspannung des Temperatursensors (220) kleiner ist als eine Trennungsfeststellungs-Referenzspannung, während der variable Widerstandsteil (221) den temporären Widerstandswert aufweist.

5. Verfahren nach Anspruch 4, worin der variable Widerstandsteil (221) einen ersten festen Widerstand (R3) aufweist, eine zweiten festen Widerstand (R4) und einen Schalter (SW).

## Revendications

1. Appareil de mesure de la température utilisant une thermistance (Rn2) à coefficient de température négatif (NTC), comprenant:
un capteur de température (220) comprenant la thermistance NTC (Rn2) et une partie résistance variable (221), dans laquelle une valeur de la résistance de la partie résistance variable (221) varie entre une valeur de la résistance par défaut, pour mesurer une température, et une valeur temporaire de la résistance, pour déterminer une déconnexion; et
une unité (260) de détermination d'un fonctionnement anormal, qui détermine si la thermistance NTC (Rn2) est ou non déconnectée, sur la base d'une tension de sortie du capteur de température (220) quand la partie résistance variable (221) a la valeur temporaire de la résistance,
**caractérisé en ce que** la valeur de la résistance par défaut est plus petite qu'une valeur de la résistance de la thermistance NTC (Rn2) à une température prédéterminée, l'unité (260) de détermination d'un fonctionnement anormal est conçue pour déterminer que la thermistance NTC (Rn2) est déconnectée, quand l'intensité de la tension de sortie du capteur de température (220) est plus petite qu'une tension de référence de détermination de la déconnexion, tandis que la partie résistance variable (221) a la valeur temporaire de la résistance,
l'unité (260) de détermination d'un fonctionnement anormal est conçue pour permettre à la partie résistance variable (221) d'avoir la valeur temporaire de la résistance quand une température présente conserve une valeur inférieure à une température limite inférieure d'une plage prédéfinie de températures de fonctionnement normal, pour une durée de référence de fonctionnement normal, ou plus,
et **en ce que** l'unité (260) de détermination d'un fonctionnement anormal est conçue pour déterminer un court-circuit de la thermistance NTC (Rn2) quand la température présente conserve une valeur supérieure à une température limite supérieure de la plage de températures de fonctionnement normal, pour une durée de référence de fonctionnement anormal, ou plus.

2. Appareil de mesure de la température selon la revendication 1, dans lequel la partie résistance variable (221) comprend une première résistance fixe (R3), une deuxième résistance fixe (R4) et un commutateur (SW).

3. Appareil de mesure de la température selon la revendication 1, comprenant en outre:
une unité (250) de stockage d'une table tension/température, qui stocke une table tension/température comprenant une pluralité de valeurs de la température, correspondant respectivement à une pluralité de tensions de sortie du capteur de température (220); et
une unité (240) de concordance tension/température, qui fait concorder la tension de sortie avec la table tension/température stockée, et envoie en sortie une température présente.

4. Procédé de fonctionnement d'un appareil de mesure de la température utilisant une thermistance NTC (Rn2), le procédé comprenant:
la détermination si une température est présente est extérieure à une plage prédéfinie de températures de fonctionnement normal par utilisation d'une valeur de la résistance par défaut d'une partie résistance variable (221) d'un capteur de température (220);
la commande du capteur de température (220) pour permettre à la partie résistance variable (221) d'avoir une valeur temporaire de la résistance quand la température présente est extérieure à la plage prédéfinie de températures de fonctionnement normal; et
la détermination si la thermistance NTC (Rn2) est déconnectée, sur la base d'une tension de sortie du capteur de température (220) quand la partie résistance variable (221) a la valeur temporaire de la résistance,
dans lequel la valeur de la résistance par défaut est plus petite qu'une valeur de la résistance de la thermistance NTC (Rn2) à une température prédéterminée, le procédé comprenant en outre la détermination (S211) d'un court-circuit de la thermistance NTC (Rn2) quand la température présente conserve une valeur supérieure à une température limite supérieure de la plage de températures de fonctionnement normal, pour une durée de référence de fonctionnement anormal, ou plus,
dans lequel la détermination si la thermistance NTC (Rn2) est déconnectée comprend la détermination (S217) si l'intensité de la tension de sortie du capteur de température (220) est plus petite qu'une tension de référence de détermination d'une déconnexion, tandis que la partie résistance variable (221) a la valeur temporaire de la résistance.

5. Procédé selon la revendication 4, dans lequel la partie résistance variable (221) comprend une première résistance fixe (R3), une deuxième résistance fixe (R4) et un commutateur (SW).
